# EUROPÄISCHE PATENTSCHRIFT

(11) **EP 3 007 997 B1**
(45) Veröffentlichungstag und Bekanntmachung des Hinweises auf die Patenterteilung: **19.04.2017**
(21) Anmeldenummer: 14755330.9
(22) Anmeldetag: 31.07.2014
(51) Int. Cl.: B65G 23/08, H02K 5/22, H02K 7/10

(54) **ANGETRIEBENE FÖRDERROLLE**
DRIVEN TRANSPORT ROLLER
ROULEAU DE TRANSPORT ENTRAÎNÉ

(30) Priorität: 02.08.2013 DE 102013012990
(43) Veröffentlichungstag der Anmeldung: 20.04.2016
(73) Patentinhaber: Interroll Holding AG, 6592 Sant' Antonino (CH)
(72) Erfinder: HEINEN, Frank, 52428 Jülich (DE)
(74) Vertreter: Müller-Boré & Partner Patentanwälte PartG mbB
(86) Internationale Anmeldenummer: PCT/EP2014/002113
(87) Internationale Veröffentlichungsnummer: WO 2015/014498

(56) Entgegenhaltungen:
- EP-A1- 0 070 639
- US-A- 4 043 630
- US-A- 5 113 101
- US-A- 5 442 248
- US-B1- 6 447 336

## Beschreibung

Die vorliegende Erfindung betrifft eine angetriebene Förderrolle.

Angetriebene Förderrollen sind zum Transport von Stückgütern auf Förderbahnen weit verbreitet. Dabei ist der Antriebsmotor in die Förderrolle integrierbar, so daß eine kompakte Bauweise erreicht wird, da kein Raum für einen externen Antrieb benötigt wird. Angetriebene Förderrollen laufen im allgemeinen im Dauerbetrieb, so daß die Förderrollen einer dauerhaften mechanischen Belastung ausgesetzt sind. Um den mechanischen Verschleiß zu minimieren, die Geräuschentwicklung beim Betrieb der Förderrolle zu reduzieren und die Reibungsverluste beim Betrieb der Förderrolle zu minimieren, ist es vorteilhaft, wenn die Konstruktion der Förderrolle das Eintreten von Fremdpartikeln, beispielsweise Staub, von außen in den Förderrollenkörper sowie das Austreten von Stoffen, beispielsweise Schmierstoffen, aus dem Förderrollenkörper verhindert, um einen zuverlässigen Betrieb zu ermöglichen.

Die US 5 442 248 A offenbart eine angetriebene bzw. mit Motor versehene Rolle für einen Förderer nach dem Oberbegriff des Anspruchs 1 und insbesondere eine angetriebene bzw. motorisierte Rolle, welche einen integralen bzw. integrierten elektrischen Verbinder bzw. Stecker aufweist.

Die US 6 447 336 B1 offenbart einen elektrischen Verbinder für eine motorisierte Förderrolle, der eine Platte mit einer ersten und einer zweiten Seite und eine Außenfläche aufweist. Die Platte ist um den elektrischen Verbinder herum angeordnet, um die erste Seite von der zweiten Seite fluidisch abzudichten.

Es ist daher eine Aufgabe der vorliegenden Erfindung, eine angetriebene Förderrolle bereitzustellen, welche eine erhöhte Betriebszuverlässigkeit aufweist.

Diese Aufgabe wird durch die Förderrolle gemäß Anspruch 1 gelöst. Bevorzugte Ausführungsformen sind Gegenstand der abhängigen Ansprüche.

Ein Aspekt der vorliegenden Erfindung betrifft eine angetriebene Förderrolle umfassend:
- zumindest einen Achskörper, welcher zumindest eine Durchtrittsöffnung aufweist;
- einen Förderrollenmantel, welcher, insbesondere mittels zweier Lager, rotierbar auf dem zumindest einen Achskörper abgestützt ist;
- einen Antrieb, mittels dessen der Förderrollenmantel relativ zu dem zumindest einen Achskörper in Rotation bringbar ist;
- zumindest eine elektrische Drahtleitung, welche mit einem ersten Ende mit dem Antrieb elektrisch verbunden ist und welche mit einem zweiten Ende in einer Verbindungskonfiguration mit einer zugeordneten elektrischen Litzenleitung verbunden ist, wobei die Verbindungskonfiguration in der Durchtrittsöffnung angeordnet ist und die Durchtrittsöffnung fluiddicht verschließt.

Erfindungsgemäß ist die elektrische Verbindung zwischen der Verbindungskonfiguration und dem Antrieb der Förderrolle durch die zumindest eine Drahtleitung ausgebildet. Eine Drahtleitung im Sinne der Anmeldung umfaßt einen einzigen, massiven elektrischen Leiter, beispielsweise einen Kupferdraht, welcher zweckmäßigerweise in einem elektrisch isolierenden Mantel angeordnet ist. Im Gegensatz dazu umfaßt eine Litzenleitung im Sinne der Anmeldung eine Vielzahl von massiven elektrischen Leitern, beispielsweise eine Vielzahl von Kupferdrähten, die bevorzugt miteinander verdrillt oder verflochten sein können. Auch die Litzenleitung ist zweckmäßigerweise mit einem elektrisch isolierenden Mantel umgeben.

Die Förderrolle umfaßt zumindest einen Achskörper, welcher zumindest eine Durchtrittsöffnung aufweist. Die Durchtrittsöffnung kann sich im wesentlichen entlang der Achsrichtung des Achskörpers erstrecken, um einen Zugang von einer Stirnseite des Achskörpers in den Innenraum der Förderrolle zu ermöglichen. Insbesondere kann die Förderrolle genau einen Achskörper aufweisen, wobei der Achskörper in Achsrichtung eine größere Längenerstreckung aufweist, als der Förderrollenmantel, welcher sich auf dem Achskörper abstützt. Alternativ kann die Förderrolle auch zwei Achskörper aufweisen, welche als Achsstummeln ausgebildet sind, wobei sich ein Endbereich des Förderrollenmantels auf einem der Achsstummeln abstützt und der entgegengesetzte Endbereich des Förderrollenmantels sich auf dem anderen Achsstummel abstützt. In diesem Fall weist die Förderrolle keinen durchgehenden Achskörper auf, wobei lediglich einer der Achskörper eine Durchtrittsöffnung aufweisen muß.

Innerhalb des Förderrollenmantels ist ein Antrieb angeordnet, welcher sich ebenfalls auf den zumindest einen Achskörper abstützen kann und welcher ebenfalls mit dem Förderrollenmantel mechanisch verbunden ist, so daß der Antrieb den Förderrollenmantel relativ zu dem zumindest einen Achskörper rotieren kann. Zweckmäßigerweise ist der zumindest eine Achskörper, an welchem der Antrieb befestigt ist, ausgelegt, in einem Förderrollenrahmen befestigt zu sein, so daß beim Betrieb der Förderrolle der Förderrollenmantel rotiert wird, während der zumindest eine Achskörper fixiert ist.

Um den Antrieb mit elektrischer Energie und/oder elektrischem Steuersignalen versorgen zu können, ist zumindest eine elektrische Drahtleitung mit dem Antrieb elektrisch verbunden. Es versteht sich, daß auch eine Vielzahl von 2, 3, 4, 5, 6, 7, 8, 9, 10 oder mehr elektrischen Drahtleitungen vorgesehen sein kann, welche mit zugeordneten elektrischen Kontakten des Antriebs verbunden sind. Insbesondere kann genau eine elektrische Drahtleitung vorgesehen sein, welche den bevorzugten elektrischen Antrieb einen elektrischen Strom zuführt, während die Rückleitung des Stroms über den Achskörper erfolgt, welcher dann elektrisch leitfähig ausgebildet ist, beispielsweise aus einem Metall. Besonders bevorzugt sind jedoch zwei oder mehr elektrische Drahtleitungen vorgesehen, um den Antrieb mit elektrischem Strom zu versorgen.

Vorzugsweise ist der zwischen dem Förderrollenmantel und dem zumindest einen Achskörper ausgebildete Innenraum zumindest teilweise mit einem Schmierstoff gefüllt, beispielsweise mit einem Schmieröl oder Schmierfett, wobei sich das Schmierfett durch die beim Betrieb der Förderrolle entstehende Wärme zum Teil verflüssigen kann. Um ein Austreten des Schmierstoffs aus der Förderrolle zu vermeiden, sind die elektrischen Leitungen im Inneren der Förderrolle als Drahtleitung ausgebildet. Die zumindest eine Drahtleitung erstreckt sich vom Antrieb zu der Verbindungskonfiguration, welche das Innere der Förderrolle fluiddicht vom Äußeren der Förderrolle trennt. Ein Fluid im Sinne der Anmeldung kann eine Flüssigkeit, ein Gas oder ein Gemisch davon umfassen. Insbesondere handelt es sich bei dem Fluid um einen flüssigen Schmierstoff, mit welchem das Innere der Förderrolle zumindest teilweise gefüllt ist, um den Antrieb, insbesondere ein Getriebe des Antriebs, schmiert. Vorteilhafterweise kann der Schmierstoff die zumindest eine Drahtleitung kontaktieren ohne über die Drahtleitung nach außen zu gelangen, da eine Drahtleitung vorteilhafterweise gegenüber einem Fluidfluß entlang der Längsrichtung der Drahtleitung dicht ist. Im Gegensatz zu einer Litzenleitung kann das Fluid nicht durch den massiven Draht dringen und/oder entlang der Kontaktfläche zwischen dem massiven Draht und dem zweckmäßigerweise vorhandenen Isolationsmantel fließen. Insbesondere kann die Kontaktfläche zwischen dem massiven Draht der Drahtleitung und dem Isolationsmantel in einfacher Weise fluiddicht ausgebildet werden.

Die Verbindungskonfiguration verbindet jede der zumindest einen elektrischen Drahtleitungen mit einer zugeordneten elektrischen Litzenleitung, mit welcher die Förderrolle bzw. der Antrieb der Förderrolle mit einer externen Stromquelle bzw. einer externen Steuerung des Antriebs verbindbar ist. Mit anderen Worten kann auch eine Vielzahl von 2, 3, 4, 5, 6, 7, 8, 9, 10 oder mehr elektrischen Litzenleitungen vorgesehen sein kann, wobei die Anzahl der Litzenleitungen identisch zu der Anzahl der Drahtleitungen sein kann. Vorteilhafterweise ist die Litzenleitung flexibler ausgebildet als eine vergleichbare Drahtleitung, so daß ein Anschlußkabel der Förderrolle, welches die zumindest eine Litzenleitung aufweist, einfacher verlegt werden kann, wobei eine geringere Bruchwahrscheinlichkeit des elektrischen Leiters innerhalb des Anschlußkabels vorliegt. Die Verbindungskonfiguration ist in der Durchtrittsöffnung derart angeordnet, daß diese Durchtrittsöffnung fluiddicht verschlossen wird. Die Verbindungskonfiguration als solche ist ebenfalls fluiddicht ausgebildet, so daß die Durchtrittsöffnung fluiddicht geschlossen ist.

Erfindungsgemäß umfaßt die Verbindungskonfiguration zumindest einen Quetschverbinder, wobei eine zugeordnete Litzenleitung bereichsweise in einer ersten Anschlußöffnung des Quetschverbinders befestigt und elektrisch kontaktiert ist und eine zugeordnete Drahtleitung bereichsweise in einer zweiten Anschlußöffnung des Quetschverbinders befestigt und elektrisch kontaktiert ist. Bevorzugt ist die erste Anschlußöffnung fluiddicht von der zweiten Anschlußöffnung getrennt.

Die Anzahl der benötigten Quetschverbinder entspricht der Anzahl der zu verbindenden Drahtleitungen. Der Quetschverbinder kann als elektrisch leitfähige Hülse ausgebildet sein, welche eine erste Anschlußöffnung und eine zweite Anschlußöffnung aufweist, wobei die erste und zweite Anschlußöffnung insbesondere an entgegengesetzten bzw. gegenüber liegenden Seiten bzw. Enden des Quetschverbinders angeordnet sind. Solche Hülsen sind beispielsweise als Aderendhülsen bekannt. Die Verbindung der zumindest einen Drahtleitung mit der zumindest einen Litzenleitung erfolgt dadurch, daß die Litzenleitung in die erste Anschlußöffnung eingeführt wird und die zugeordnete Drahtleitung in die zweite Anschlußöffnung eingeführt wird, wobei anschließend die Hülse des Quetschverbinders von außen gequetscht wird, um den Innendurchmesser der Hülse lokal zu verringern und die Innenwandung der Hülse mit der eingeführten Leitung elektrisch und mechanisch zu kontaktieren. Durch das Quetschen des Quetschverbinders werden die eingeführten Leitungen innerhalb der Hülse fixiert. Dabei kann der Quetschverbinder als durchgängige Hülse ausgebildet sein, durch welche ein Fluid von der ersten Anschlußöffnung zur zweiten Anschlußöffnung strömen kann bzw. durch welche auch die Drahtleitung bzw. die Litzenleitung durchgeführt werden könnte. Bevorzugt ist jedoch eine Trennwand im Inneren der Hülse ausgebildet, vorzugsweise mittig, so daß die Drahtleitung bzw. Litzenleitung gleich weit in die Hülse bzw. den Quetschverbinder einführbar sind, bevor diese gegen die Trennwand stoßen. Vorteilhafterweise verhindert die Trennwand einen Fluidfluß von der ersten Anschlußöffnung zur zweiten Anschlußöffnung und umgekehrt, wodurch eine verbesserte Fluiddichtigkeit der Verbindungskonfiguration erreichbar ist.

Vorzugsweise weist die Verbindungskonfiguration eine Vielzahl von Quetschverbinderaufnahmen auf, wobei jeder der zumindest einen Quetschverbinder durch eine zugeordnete Quetschverbinderaufnahme zumindest bereichsweise aufnehmbar ist, wobei die Quetschverbinder voneinander elektrisch isoliert sind.

Bevorzugt sind die Quetschverbinder von einem elektrisch isolierenden Material umgeben, beispielsweise einem Isoliermantel aus einem Kunststoff. Besonders bevorzugt überragt der Isoliermantel die erste und zweite Anschlußöffnung des Quetschverbinders, so daß die elektrischen Leiter der Litzenleitung, das heißt die Litzen, und der Drahtleitung, das heißt der massive Draht, nicht berührt werden können, wenn diese mittels des Quetschverbinders miteinander elektrisch verbunden sind. Vorteilhafterweise können so eine Vielzahl von Quetschverbindern nebeneinander angeordnet werden, ohne daß ein elektrischer Kurzschluß zwischen zwei verschiedenen Drahtleitungen bzw. Litzenleitungen auftritt. Alternativ oder zusätzlich kann die Verbindungskonfiguration auch einen Aufnahmekörper aufweisen, welcher eine Vielzahl von Quetschverbinderaufnahmen aufweist, in welche ein zugehöriger Quetschverbinder zumindest bereichsweise einführbar ist, wobei der Aufnahmekörper aus einem elektrisch isolierenden Material besteht. Insbesondere werden die Quetschverbinder durch den Aufnahmekörper voneinander beabstandet gehalten, so daß die einzelnen Quetschverbinder bzw. elektrischen Drahtleitungen bzw. Litzenleitungen voneinander elektrisch isoliert sind. Beispielsweise kann der Aufnahmekörper aus einem Kunststoff ausgebildet sein. Insbesondere kann der Aufnahmekörper als ein längsgestreckter Körper mit der Längserstreckung L ausgebildet sein, an dessen Umfang eine Vielzahl von Quetschverbinderaufnahmen ausgebildet sind, so daß die zugeordneten Quetschverbinder entgegen einer Radiusrichtung R, welche senkrecht zur Längsrichtung und senkrecht zur Umfangsrichtung U steht, in die zugeordnete Quetschverbinderaufnahme einführbar sind. Die Quetschverbinder können in der zugeordneten Quetschverbinderaufnahme beispielsweise durch Kleben, durch Klemmen oder durch Verriegeln mittels einer Verriegelungseinrichtung fixiert werden. Bevorzugt ist eine Verriegelungseinrichtung vorgesehen, welche als elektrisch isolierende Hülse ausgebildet ist, welche nach dem Anordnen der Quetschverbinder in den zugeordneten Quetschverbinderaufnahmen über den Aufnahmekörper gestülpt wird, um die Quetschverbinderaufnahmen entlang des Umfangs des Aufnahmekörpers derart zu schließen, daß die Quetschverbinder nicht mehr aus den Quetschverbinderaufnahmen entlang der Radiusrichtung R verlagert werden können.

Vorzugsweise ist die Verbindungskonfiguration mit einer elektrisch isolierenden Vergußmasse vergossen.

Insbesondere können Hohlräume, welche zwischen dem Aufnahmekörper der Verbindungskonfiguration und der Verriegelungseinrichtung ausgebildet sind mittels der Vergußmasse fluiddicht verschlossen werden. Dadurch wird vorteilhafterweise ein Fluidfluß durch die Verbindungskonfiguration, insbesondere innerhalb einer als Hülse ausgebildeten Verriegelungseinrichtung, verhindert.

Vorzugsweise ist ein O-Ring zwischen der Verbindungskonfiguration und einer Wandung der Durchtrittsöffnung angeordnet.

Bevorzugt ist die Außenwandung der Verbindungskonfiguration, welche ausgelegt ist mit der Durchtrittsöffnung zu kontaktieren bzw. dort angeordnet zu sein, im wesentlichen zylindrisch bzw. rotationssymmetrisch ausgebildet. Die Durchtrittsöffnung ist bevorzugt formkongruent bzw. komplementär zur Verbindungskonfiguration ausgebildet, besonders bevorzugt als im wesentlichen zylindrische Öffnung bzw. Bohrung in dem zumindest einen Achskörper. Um die Kontaktfläche zwischen der Verbindungskonfiguration und der Durchtrittsöffnung fluiddicht zu schließen, kann zumindest ein O-Ring vorgesehen sein, welcher zwischen der Verbindungskonfiguration und der Durchtrittsöffnung angeordnet ist. Weiter bevorzugt kann der zumindest eine O-Ring in einer zugeordneten Nut zumindest bereichsweise aufgenommen sein, welche an der Verbindungskonfiguration und/oder an der Durchtrittsöffnung ausgebildet ist. Durch die Nut wird vorteilhafterweise vermieden, daß der O-Ring, welcher in der Nut zumindest bereichsweise aufgenommen ist, beim Einführen bzw. Anordnen der Verbindungskonfiguration in die Durchtrittsöffnung verlagert wird. Alternativ oder zusätzlich kann die Wandung der Verbindungskonfiguration, welche ausgelegt ist mit der Durchtrittsöffnung zu kontaktieren, zumindest bereichsweise aus einem elastisch rückstellfähigen und fluiddichten Material ausgebildet sein, so daß die Verbindungskonfiguration als solche, auch ohne O-Ring, die Durchtrittsöffnung fluiddicht verschließen kann.

Vorzugsweise ist ein zwischen dem Förderrollenmantel und dem zumindest einen Achskörper ausgebildeter Innenraum zumindest teilweise mit einem Schmierstoff gefüllt.

Unter einem Schmierstoff im Sinne der Anmeldung wird insbesondere ein Schmieröl verstanden. Als Schmierstoff können jedoch auch Schmierfette eingesetzt werden, welche ihre Viskosität erst im Laufe des Betriebes verringern und sich beispielsweise zumindest teilweise aufgrund der beim Betrieb entstehenden Reibung selber verflüssigen können. Vorteilhafterweise sind die im Inneren der Förderrolle angeordneten massiven Drahtleitungen dicht gegenüber dem Schmieröl, so daß - im Gegensatz zu Litzenleitungen - die Drahtleitungen dem Schmieröl keine Wegsamkeit bieten, um ins Äußere zu gelangen. Dadurch bleibt der Schmierölpegel in der Förderrolle konstant und die Schmierung ist in der Förderrolle beweglichen Elemente ist gewährleistet.

### Figurenbeschreibung

Bevorzugte Ausführungsformen einer Förderrolle werden nachfolgend anhand begleitender Figuren beispielhaft beschrieben. Es zeigt:
- Figur 1: einen Längsschnitt durch einen Teil einer Förderrolle,
- Figur 2: einen Längsschnitt durch eine Verbindungskonfiguration,
- Figur 3: einen Querschnitt durch die in Figur 2 gezeigte Verbindungskonfiguration,
- Figur 4: einen Quetschverbinder.

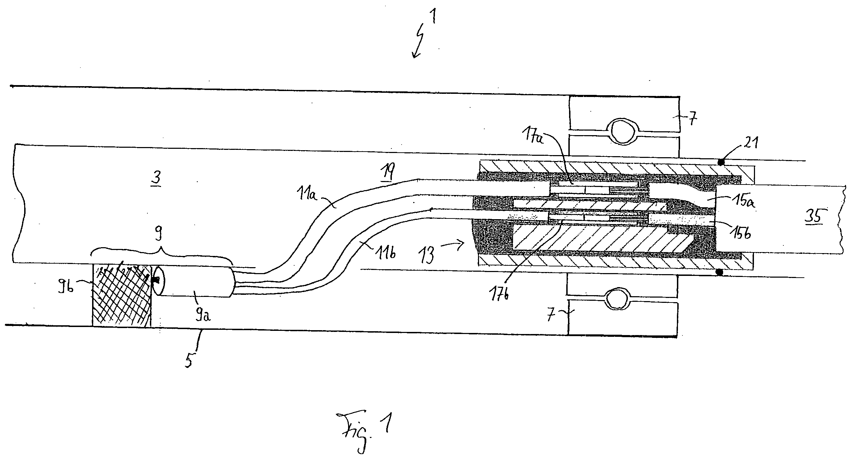

Die Figur 1 zeigt einen Längsschnitt durch einen Teil einer Förderrolle 1, welche einen einzigen Achskörper 3 und einen Förderrollenmantel 5 aufweist, wobei der Förderrollenmantel 5 mittels zweier Lager 7 (lediglich ein Lager 7 gezeigt) rotierbar auf dem Achskörper 3 gelagert ist. Sowohl der Achskörper 3 als auch der Förderrollenmantel 5 können aus Kunststoff oder Metall ausgebildet sein. Als Lager 7 können Kugellager, Wälzlager oder andere Lager vorgesehen sein. Insbesondere kann die Förderrolle 1 Labyrinthdichtungen oder Wellendichtringe (nicht gezeigt) aufweisen, welche verhindern, daß ein Fluid, beispielsweise im Bereich der Lager, von außen in die Förderrolle 1 eindringt oder, insbesondere das Schmieröl betreffend, aus der Förderrolle 1 austritt.

Der Förderrollenmantel 5 kann mittels eines Antriebs 9 gegenüber dem Achskörper 3 in Rotation versetzt werden, beispielsweise um Stückgüter auf einer Förderrollenbahn zu beschleunigen bzw. zu befördern. Um die Förderrolle in solch einer Förderrollenbahn zu befestigen, können die Enden des Achskörpers 3 in einen entsprechenden Förderrollenrahmen aufgenommen und befestigt sein. Der Antrieb erfolgt bevorzugt mit einem elektrischen Motor 9a, dessen Rotation mittels eines Getriebes 9b auf den Förderrollenmantel 5 übertragen wird. Der Motor 9a des Antriebs 9 wird über elektrische Drahtleitungen 11a, 11 b mit Strom versorgt. Die elektrischen Drahtleitungen 11a, 11 b sind mit einem Ende mit dem Motor 9a elektrisch kontaktiert. Das entgegengesetzte Ende der elektrischen Drahtleitungen 11a, 11 b ist zu einer Verbindungskonfiguration 13 geführt, um dort mit einer zugeordneten Litzenleitung 15a, 15b mittels eines Quetschverbinders 17a, 17b elektrisch kontaktiert zu sein. Die Verbindungskonfiguration 13 ist in einer Durchtrittsöffnung 19 angeordnet, welche in dem Achskörper 3 ausgebildet ist. Dabei ist die Verbindungskonfiguration 13 im wesentlichen zylindrisch ausgebildet, während die Durchtrittsöffnung 19 formkongruent dazu als Bohrung bzw. zylindrische Öffnung ausgebildet ist. Um ein Austreten von Fluid durch die Durchtrittsöffnung 19 im Bereich der Verbindungskonfiguration 13 zu verhindern, ist ein O-Ring 21 vorgesehen, welcher zwischen der Verbindungskonfiguration 13 und der Durchtrittsöffnung 19 angeordnet ist, um die Durchtrittsöffnung 19 fluiddicht abzudichten.

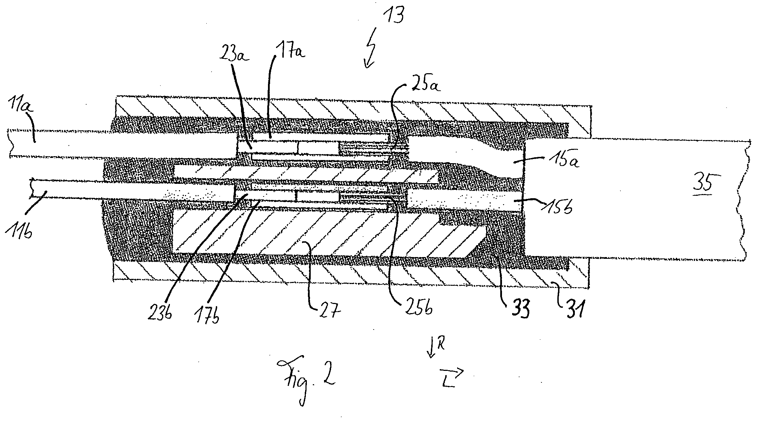

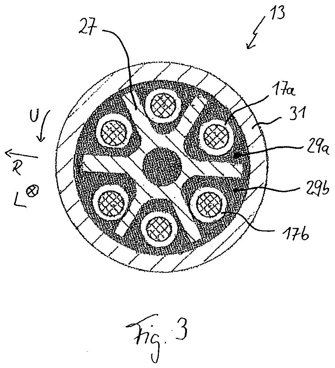

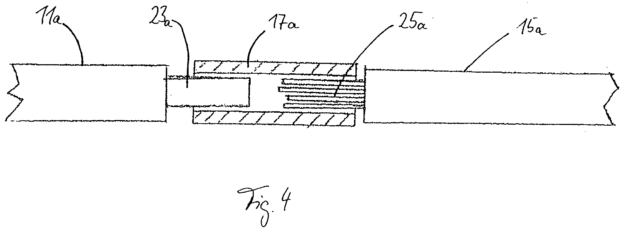

Die Figur 2 zeigt eine Detailansicht der Verbindungskonfiguration 13 in einem Längsschnitt, während die Figur 3 einen senkrecht dazu stehenden Querschnitt durch die Verbindungskonfiguration 13 zeigt. Die Verbindungskonfiguration 13 umfaßt eine Vielzahl von Quetschverbindern, wie in Figur 4 gezeigt.

Zum Ausbilden der Verbindungskonfiguration 13 werden die Isolationsmäntel der elektrischen Drahtleitungen 11 a, 11 b entfernt, so daß der massive elektrische Leiter 23a, 23b in den zugeordneten Quetschverbinder 17a, 17b, beispielsweise in eine zweite Anschlußöffnung, einführbar und elektrisch kontaktierbar ist. Entsprechend werden bei allen elektrischen Litzenleitungen 15a die Isolationsmäntel an den Enden bereichsweise entfernt, so daß die elektrisch leitfähigen Litzen 25a, 25b in den zugeordneten Quetschverbinder 17a, 17b, beispielsweise in eine erste Anschlußöffnung, einführbar und elektrisch kontaktierbar sind. Der Quetschverbinder umfaßt im allgemeinen eine metallene Hülle, welche nach dem Einführen der Litzenleitung und Drahtleitung von außen gequetscht wird, um die Litzen bzw. den massiven Draht in der Hülse festzulegen und einen elektrischen Kontakt zwischen der Litzenleitung 15a und der Drahtleitung 11a mittels des Quetschverbinders 17a herzustellen.

Die Verbindungskonfiguration 13 weist einen Aufnahmekörper 27 auf, welcher aus einem elektrisch isolierenden Kunststoff ausgebildet ist. Der Aufnahmekörper 27 umfaßt eine Vielzahl von Quetschverbinderaufnahmen 29a, 29b, in welche jeweils ein zugeordneter Quetschverbinder 17a, 17b aufnehmbar ist. Wie in Figur 3 gezeigt, sind die Quetschverbinderaufnahmen 29a, 29b entlang des Umfangs U des Aufnahmekörpers 27 angeordnet, so daß die Quetschverbinder 17a, 17b entgegen einer Radiusrichtung R, welche senkrecht zur Umfangsrichtung U und einer Längsrichtung L des Aufnahmekörpers 27 orientiert ist, in die zugeordnete Quetschverbinderaufnahme 29a, 29b einführbar sind. In dem Aufnahmekörper 27 sind die einzelnen Quetschverbinder 17a, 17b voneinander beabstandet angeordnet und durch den Aufnahmekörper 27, welcher aus einem elektrisch isolierendem Material ausgebildet ist, voneinander elektrisch isoliert. Um ein Verlagern der Quetschverbinder 17a, 17b aus der zugeordneten Quetschverbinderaufnahme 29a, 29b heraus zu verhindern, weist die Verbindungskonfiguration 13 eine Verriegelungseinrichtung 31 auf, welche als zylindrische Hülse ausgebildet ist, und bevorzugt aus einem elektrisch isolierenden Material besteht. Nach dem Anordnen der Quetschverbinder 17a, 17b in die Quetschverbinderaufnahme 29a, 29b kann die Verriegelungseinrichtung 31 durch ein Verlagern entlang der Längsrichtung L derart positioniert werden, daß die Quetschverbinderaufnahmen 29a, 29b verriegelt bzw. verschlossen sind und die Quetschverbinder 17a, 17b gehindert sind, aus den Quetschverbinderaufnahmen 29a, 29b verlagert zu werden.

Um die Verbindungskonfiguration 13 fluiddicht auszubilden, kann eine fluiddichte und elektrisch isolierende Vergußmasse 33 in die Zwischenräume zwischen der Verriegelungseinrichtung 31, den Quetschverbindern 17a, 17b und dem Aufnahmekörper 27 injiziert bzw. gegossen werden. Dabei können insbesondere freie Bereiche, welche zwischen den Quetschverbindern 17a, 17b und dem Isoliermänteln der Drahtleitung 11 a, 11 b bzw. der Litzenleitung 15a, 15b auftreten, elektrisch isolierend umschlossen bzw. vergossen werden. Bevorzugt besteht die Vergußmasse 33 aus einem thermoplastischen Polymer bzw. einem thermoplastischen Elastomer.

Die Verbindungskonfiguration 13 kann dann in die Durchtrittsöffnung 19 des Achskörpers 3 eingeführt werden und die Durchtrittsöffnung 19 fluiddicht verschließen. Dazu kann insbesondere wie in Figur 1 gezeigt, ein O-Ring 21 vorgesehen sein. Die aus der Verbindungskonfiguration 13 in Richtung des äußeren austretenden Litzenleitungen können zu einem Anschlußkabel 35 zusammengefaßt werden, welches mit einer externen Energiequelle und/oder einer Steuervorrichtung (nicht gezeigt) verbindbar ist, um dem Antrieb 9 die notwendige elektrische Energie zur Verfügung zu stellen bzw. um den Antrieb 9 zu steuern. Vorteilhafterweise ist das aus Litzenleitungen bestehende Anschlußkabel 35 flexibel und dauerhaft biegbar in einfacher Weise zu verlegen und zu handhaben, wobei vorteilhafterweise aufgrund der Litzenstruktur die Gefahr eines Bruches eines elektrischen Leiters und damit eines Ausfalles der Förderrolle minimiert ist. Gleichzeitig kann ein Fluid, insbesondere ein Schmieröl, welches im Inneren der Förderrolle 1 verbleiben soll, durch die Verwendung der massiven Drahtleitungen 11a, 11 b gehindert, ins Äußere zu gelangen, welches bei Verwendung von Litzenleitungen im Inneren der Förderrolle 1 durchaus möglich wäre, da Litzenleitungen Fließwege für Fluide zwischen den Litzen aufweisen.

### Bezugszeichenliste

- 1: Förderrolle
- 3: Achskörper
- 5: Förderrollenmantel
- 7: Lager
- 9: Antrieb
- 9a: Motor
- 9b: Getriebe
- 11a,b: Drahtleitungen
- 13: Verbindungskonfiguration
- 15a,b: Litzenleitung
- 17a,b: Quetschverbinder
- 19: Durchtrittsöffnung
- 21: O-Ring
- 23a,b: Massiver Draht
- 25a,b: Litze
- 27: Aufnahmekörper
- 29a,b: Quetschverbinderaufnahme
- 31: Verriegelungseinrichtung
- 33: Vergußmasse
- 35: Anschlußkabel
- L: Längsrichtung
- R: Radius
- U: Umfangsrichtung

## Patentansprüche

1. Angetriebene Förderrolle (1) umfassend:
- zumindest einen Achskörper (3), welcher zumindest eine Durchtrittsöffnung (19) aufweist;
- einen Förderrollenmantel (5), welcher rotierbar auf dem zumindest einen Achskörper (7) abgestützt ist;
- einen Antrieb (9), mittels dessen der Förderrollenmantel (5) relativ zu dem zumindest einen Achskörper (3) in Rotation bringbar ist;
- zumindest eine elektrische Drahtleitung (11 a, 11 b), welche mit einem ersten Ende mit dem Antrieb (9) elektrisch verbunden ist und welche mit einem zweiten Ende in einer Verbindungskonfiguration (13) mit einer zugeordneten elektrischen Litzenleitung (15a, 15b) verbunden ist, wobei die Verbindungskonfiguration (13) in der Durchtrittsöffnung (19) angeordnet ist und die Durchtrittsöffnung (19) fluiddicht verschließt; **dadurch gekennzeichnet, dass**
die Verbindungskonfiguration (13) zumindest einen Quetschverbinder (17a, 17b) umfaßt, wobei eine zugeordnete Litzenleitung (15a, 15b) bereichsweise in einer ersten Anschlußöffnung des Quetschverbinders (17a, 17b) befestigt ist und eine zugeordnete Drahtleitung (11 a, 11 b) bereichsweise in einer zweiten Anschlußöffnung des Quetschverbinders (17a, 17b) befestigt ist.

2. Förderrolle (1) gemäß Anspruch 1, wobei die erste Anschlußöffnung fluiddicht von der zweiten Anschlußöffnung getrennt ist.

3. Förderrolle (1) gemäß Anspruch 1 oder 2, wobei die Verbindungskonfiguration (13) eine Vielzahl von Quetschverbinderaufnahmen (29a, 29b) aufweist, wobei jeder der zumindest einen Quetschverbinder (17a, 17b) durch eine zugeordnete Quetschverbinderaufnahme (29a, 29b) zumindest bereichsweise aufnehmbar ist, wobei die Quetschverbinder (17a, 17b) voneinander elektrisch isoliert sind.

4. Förderrolle (1) gemäß einem der vorigen Ansprüche, wobei die Verbindungskonfiguration (13) mit einer elektrisch isolierenden Vergußmasse (33) vergossen ist.

5. Förderrolle (1) gemäß einem der vorigen Ansprüche, wobei ein O-Ring (21) zwischen der Verbindungskonfiguration (13) und einer Wandung der Durchtrittsöffnung (19) angeordnet ist.

6. Förderrolle (1) gemäß einem der vorigen Ansprüche, wobei ein zwischen dem Förderrollenmantel (5) und dem zumindest einen Achskörper (3) ausgebildeter Innenraum zumindest teilweise mit einem Schmierstoff gefüllt ist.

## Claims

1. A driven conveyor roller (1), comprising:
- at least one axle body (3) having at least one passage opening (19);
- a conveyor roller shell (5) rotatably supported on the at least one axle body (7);
- a drive (9) by means of which the conveyor roller shell (5) can be caused to rotate relative to the at least one axle body (3);
- at least one electrical wire line (11 a, 11 b), which is electrically connected to the drive (9) with a first end and, in a connection configuration (13), is connected to an associated electrical stranded-wire line (15a, 15b) with a second end, wherein the connection configuration (13) is arranged in the passage opening (19) and closes the passage opening (19) in a fluid-tight manner; **characterized in that**
the connection configuration (13) comprises at least one crimp connector (17a, 17b), wherein an associated stranded-wire line (15a, 15b) is in part(s) secured in a first terminal opening of the crimp connector (17a, 17b) and an associated wire line (11a, 11b) is in part(s) secured in a second terminal opening of the crimp connector (17a, 17b).

2. The conveyor roller (1) according to claim 1, wherein the first terminal opening is separated from the second terminal opening in a fluid-tight manner.

3. The conveyor roller (1) according to claim 1 or 2, wherein the connection configuration (13) has a plurality of crimp connector receptacles (29a, 29b), wherein each of the at least one crimp connector (17a, 17b) is receivable at least in part(s) by an associated crimp connector receptacle (29a, 29b), wherein the crimp connectors (17a, 17b) are electrically insulated from each other.

4. The conveyor roller (1) according to one of the preceding claims, wherein the connection configuration (13) is cast with an electrically insulating casting compound (33).

5. The conveyor roller (1) according to one of the preceding claims, wherein an O-ring (21) is arranged between the connection configuration (13) and a wall of the passage opening (19).

6. The conveyor roller (1) according to one of the preceding claims, wherein an interior space formed between the conveyor roller shell (5) and the at least one axle body (3) is at least partially filled with a lubricant.

## Revendications

1. Rouleau de transport (1) entraîné, comprenant :
- au moins un corps d'axe (3) qui présente au moins une ouverture de passage (19) ;
- une jupe de rouleau de transport (5) qui est en appui rotatif sur le corps d'axe (7) au moins au nombre de un ;
- un mécanisme d'entraînement (9) au moyen duquel la jupe de rouleau de transport (5) peut être mise en rotation par rapport au corps d'axe (3) au moins au nombre de un ;
- au moins une ligne filaire (11a, 11b) électrique qui est connectée électriquement par une première extrémité au mécanisme d'entraînement (9) et qui est connectée par une deuxième extrémité dans une configuration de connexion (13) à une ligne multibrin (15a, 15b) électrique affectée, la configuration de connexion (13) étant disposée dans l'ouverture de passage (19) et fermant l'ouverture de passage (19) de façon étanche aux fluides ; **caractérisé en ce que**
la configuration de connexion (13) comprend au moins un connecteur à sertir (17a, 17b), une ligne multibrin (15a, 15b) affectée étant fixée par zones dans une première ouverture de jonction du connecteur à sertir (17a, 17b), et une ligne filaire (11a, 11b) affectée étant fixée par zones dans une deuxième ouverture de jonction du connecteur à sertir (17a, 17b).

2. Rouleau de transport (1) selon la revendication 1, la première ouverture de jonction étant séparée de la deuxième ouverture de jonction de façon étanche aux fluides.

3. Rouleau de transport (1) selon la revendication 1 ou 2, la configuration de connexion (13) présentant une multiplicité de logements de connecteurs à sertir (29a, 29b), chacun des connecteurs à sertir (17a, 17b) au moins au nombre de un pouvant être logé au moins par zones par un logement de connecteurs à sertir (29a, 29b) affecté, les connecteurs à sertir (17a, 17b) étant isolés électriquement les uns des autres.

4. Rouleau de transport (1) selon l'une des revendications précédentes, une masse de scellement (33) électriquement isolante étant coulée sur la configuration de connexion (13).

5. Rouleau de transport (1) selon l'une des revendications précédentes, un joint torique (21) étant disposé entre la configuration de connexion (13) et une paroi de l'ouverture de passage (19).

6. Rouleau de transport (1) selon l'une des revendications précédentes, un espace intérieur constitué entre la jupe de rouleau de transport (5) et le corps d'axe (3) au moins au nombre de un étant rempli au moins partiellement avec un lubrifiant.
